Europäisches Patentamt

(19) European Patent Office

Office européen des brevets

(11) EP 0 717 563 A2

## (12) EUROPEAN PATENT APPLICATION

(43) Date of publication:
19.06.1996 Bulletin 1996/25

(51) Int. Cl.⁶: **H04N 5/782**

(21) Application number: 95308936.4

(22) Date of filing: 08.12.1995

(84) Designated Contracting States:
DE FR GB

(30) Priority: 12.12.1994 JP 332102/94

(71) Applicant: **VICTOR COMPANY OF JAPAN, LIMITED**
Kanagawa-ku Yokohama (JP)

(72) Inventors:
• Ohishi, Takeo
Konan-ku, Yokohama (JP)

• Harumatsu, Mitsuo
Izumi-ku, Yokohama (JP)
• Higurashi, Seiji
Tokyo (JP)

(74) Representative: **Dempster, Benjamin John Naftel et al**
Withers & Rogers
4 Dyer's Buildings,
Holborn
London EC1N 2JT (GB)

(54) **Video signal recording apparatus and video signal reproducing apparatus**

(57)     In a video signal recording apparatus, a video signal is divided into portions for every frame or every field. The video signal portions correspond to different regions in a 1-frame picture or a 1-field picture respectively. The video signal portions include first and second video signal portions. First and second magnetic heads (10A,10B,12A,12B) have different azimuths respectively. During a first frame or a first field, the first video signal portion is recorded on a recording medium via the first magnetic head (10A,12A) along a first track, and the second video signal portion is recorded on the recording medium via the second magnetic head (10B,12B) along a second track. The second track neighbors the first track. During a second frame different from the first frame or a second field different from the first field, the first video signal portion is recorded on the recording medium via the second magnetic head (10B,12B) along a third track, and the second video signal portion is recorded on the recording medium via the first magnetic head (10A,12A) along a fourth track. The fourth track neighbors the third track.

## FIG. 6

EP 0 717 563 A2

## Description

This invention relates to a video signal recording apparatus. This invention also relates to a video signal reproducing apparatus.

Generally, digital VTR's (video tape recorders) are better than analog VTR's in signal-to-noise ratio related to reproduced video signals.

In some prior-art digital VTR's, every 1-frame or 1-field segment of a digital video signal is divided into plural sub segments corresponding to respective horizontally-extending portions of a 1-frame or 1-field picture. For every frame or field, the plural sub segments of the digital video signal are recorded on a magnetic tape by rotary magnetic heads of a helical scanning type along different tracks respectively. The rotary magnetic heads are designed so that neighboring tracks will have different azimuths respectively.

In such a prior-art digital VTR, when one of magnetic heads fails, information pieces of same portions of successive 1-frame or 1-field pictures continue to be not recorded on a magnetic tape. During reproduction, the unrecorded information pieces can not be estimated by an inter-frame-correlation-based or inter-field-correlation-based interpolation process since they relate to the same portions of successive 1-frame or 1-field pictures. Accordingly, it is difficult to compensate for the unrecorded information pieces in recovering complete 1-frame or 1-field picture information.

It is an object of this invention to provide an improved video signal recording apparatus.

It is another object of this invention to provide an improved video signal reproducing apparatus.

A first aspect of this invention provides a video signal recording apparatus comprising first means for dividing a video signal into portions for every frame or every field, said video signal portions corresponding to different regions in a 1-frame picture or a 1-field picture respectively, said video signal portions including first and second video signal portions; first and second magnetic heads having different azimuths respectively; second means for, during a first frame or a first field, recording said first video signal portion on a recording medium via the first magnetic head along a first track, and recording said second video signal portion on the recording medium via the second magnetic head along a second track neighboring the first track; and third means for, during a second frame different from the first frame or a second field different from the first field, recording said first video signal portion on the recording medium via the second magnetic head along a third track, and recording said second video signal portion on the recording medium via the first magnetic head along a fourth track neighboring the third track.

A second aspect of this invention is based on the first aspect thereof, and provides a video signal recording apparatus wherein the video signal is of a digital type.

A third aspect of this invention is based on the first aspect thereof, and provides a video signal recording apparatus wherein the first frame and the second frame neighbor each other along a time base, or the first field and the second field neighbor each other along a time base.

A fourth aspect of this invention is based on the first aspect thereof, and provides a video signal recording apparatus wherein each of the first video signal portion and the second video signal portion includes information of whether the present video signal portion relates to the first frame or the second frame, or information of whether the present video signal portion relates to the first field or the second field.

A fifth aspect of this invention provides a video signal reproducing apparatus comprising first and second magnetic heads having different azimuths respectively; first means for, during a first frame or a first field, reproducing a first video signal portion from a recording medium via the first magnetic head along a first track, and reproducing a second video signal portion from the recording medium via the second magnetic head along a second track neighboring the first track; second means for, during the first frame or the first field, making the first video signal portion and the second video signal portion into correspondence with first and second different regions in a 1-frame picture or a 1-field picture respectively; third means for, during a second frame different from the first frame or a second field different from the first field, reproducing a third video signal portion from the recording medium via the first magnetic head along a third track, and reproducing a fourth video signal portion from the recording medium via the second magnetic head along a fourth track neighboring the third track; and fourth means for, during the second frame or the second field, making the fourth video signal portion and the third video signal portion into correspondence with the first and second different regions in a 1-frame picture or a 1-field picture respectively.

A sixth aspect of this invention is based on the fifth aspect thereof and provides a video signal reproducing apparatus wherein the first, second, third, and fourth video signal portions are of a digital type.

A seventh aspect of this invention is based on the fifth aspect thereof, and provides a video signal reproducing apparatus wherein the first frame and the second frame neighbor each other along a time base, or the first field and the second field neighbor each other along a time base.

An eighth aspect of this invention is based on the fifth aspect thereof, and provides a video signal recording apparatus wherein each of the first, second, third, and fourth video signal portions includes information of whether the present video signal portion relates to the first frame or the second frame, or information of whether the present video signal portion relates to the first field or the second field, and wherein the second means is responsive to the information in the first video signal portion and the information in the second video signal portion, and the fourth means is responsive to the information in the third video signal portion and the information of the fourth video signal portion.

Fig. 1 is a diagram of a 1-frame picture divided into 12 portions.

Fig. 2 is a diagram of tracks on a magnetic tape in a related-art digital VTR.

Fig. 3 is a diagram of successive 1-frame pictures each divided into 12 portions according to an embodiment of this invention.

Fig. 4 is a diagram of tracks on a magnetic tape in the embodiment of this invention.

Fig. 5 is a diagram of magnetic heads on a rotary drum in the embodiment of this invention.

Fig. 6 is a block diagram of a recording apparatus in the embodiment of this invention.

Fig. 7 is a diagram of luminance-information DCT blocks corresponding to a 1-frame picture in the embodiment of this invention.

Fig. 8 is a diagram of color-information DCT blocks corresponding to a 1-frame picture in the embodiment of this invention.

Fig. 9 is a diagram of one macro-block composed of luminance-information DCT blocks and color-information DCT blocks in the embodiment of this invention.

Fig. 10 is a diagram of macro-blocks corresponding to a 1-frame picture in the embodiment of this invention.

Fig. 11 is a diagram of one super-block composed of macro-blocks in the embodiment of this invention.

Fig. 12 is a diagram of super-blocks corresponding to a 1-frame picture in the embodiment of this invention.

Fig. 13 is a diagram of a unit composed of luminance-information pieces and color-information pieces in the embodiment of this invention.

Fig. 14 is a diagram of tracks on a magnetic tape, and data recorded on a sector of one track in the embodiment of this invention.

Fig. 15 is a diagram of units, outer code words, and inner code words in the embodiment of this invention.

Fig. 16 is a block diagram of a reproducing apparatus in the embodiment of this invention.

There now follows a description of the preferred embodiment.

A related-art digital VTR will be described firstly for a better understanding of this invention.

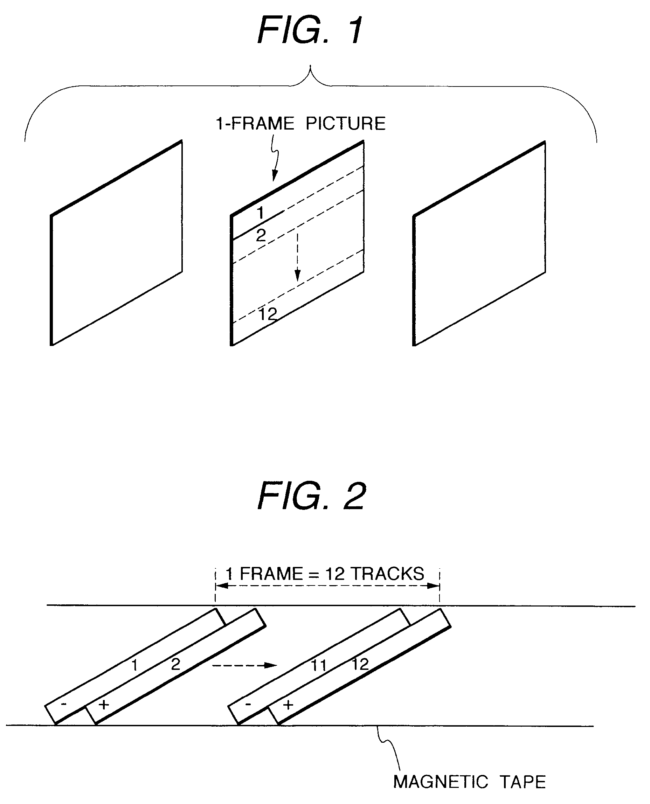

With reference to Fig. 1, in a related-art digital VTR, every 1-frame segment of a digital video signal is divided into plural sub segments corresponding to respective horizontally-extending portions "1", "2", • • •,, and "12" of a 1-frame picture. As shown in Fig. 2, for every frame, the plural sub segments of the digital video signal which correspond to the portions "1", "2", • • •, and "12" of a 1-frame picture (see Fig. 1) are recorded on a magnetic tape by four rotary magnetic heads of a helical scanning type along different tracks "1", "2", • • •, and "12" respectively. The rotary magnetic heads are designed so that neighboring tracks will have different azimuths respectively.

In the related-art digital VTR, a first magnetic head corresponds to the portions "1", "5", and "9" of every 1-frame picture, and also corresponds to the tracks "1", "5", and "9" for every frame. A second magnetic head corresponds to the portions "2", "6", and "10" of every 1-frame picture, and also corresponds to the tracks "2", "6", and "10" for every frame, A third magnetic head corresponds to the portions "3", "7", and "11" of every 1-frame picture, and also corresponds to the tracks "3", "7", and "11" for every frame. A fourth magnetic head corresponds to the portions "4", "8", and "12" of every 1-frame picture, and also corresponds to the tracks "4", "8", and "12" for every frame.

In the related-art digital VTR, when the first magnetic head fails, information pieces of the same portions "1", "5", and "9" of successive 1-frame pictures continue to be not recorded on the magnetic tape. During reproduction, the unrecorded information pieces can not be estimated by an inter-frame-correlation-based interpolation process since they relate to the same portions "1", "5", and "9" of successive 1-frame pictures. Accordingly, it is difficult to compensate for the unrecorded information pieces in recovering complete 1-frame picture information.

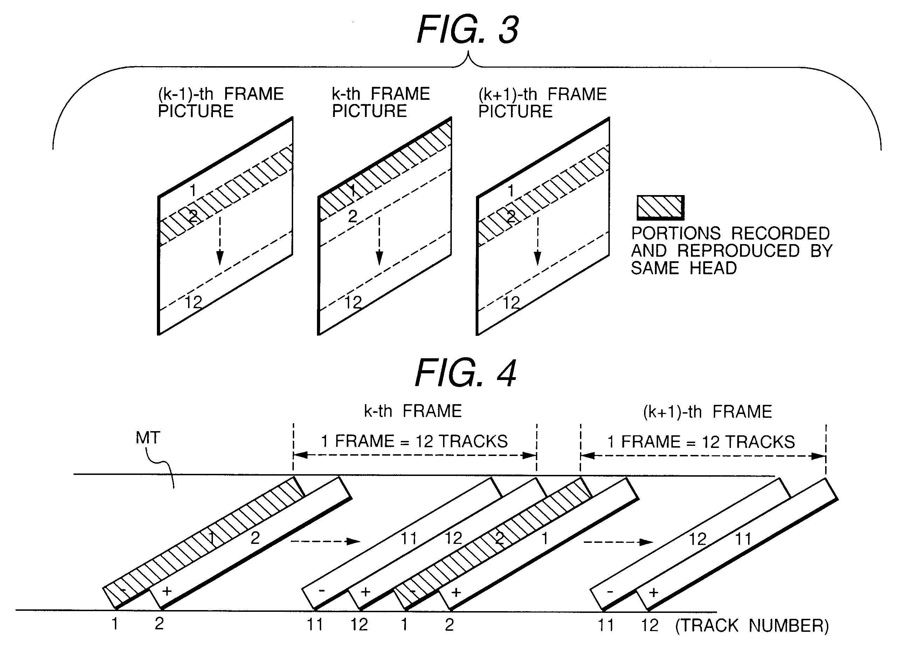

An embodiment of this invention will be described hereinafter. With reference to Fig. 3, every 1-frame segment of a digital video signal is divided into plural sub segments corresponding to respective horizontally-extending portions "1", "2", • • •, and "12" of a 1-frame picture. As shown in Fig. 4, for every frame, the plural sub segments of the digital video signal which correspond to the portions "1", "2", • • •, and "12" of a 1-frame picture (see Fig. 3) are recorded on a magnetic tape MT by four rotary magnetic heads of a helical scanning type along different tracks "1", "2", • • •, and "12" respectively. The rotary magnetic heads are designed so that neighboring tracks will have different azimuths respectively.

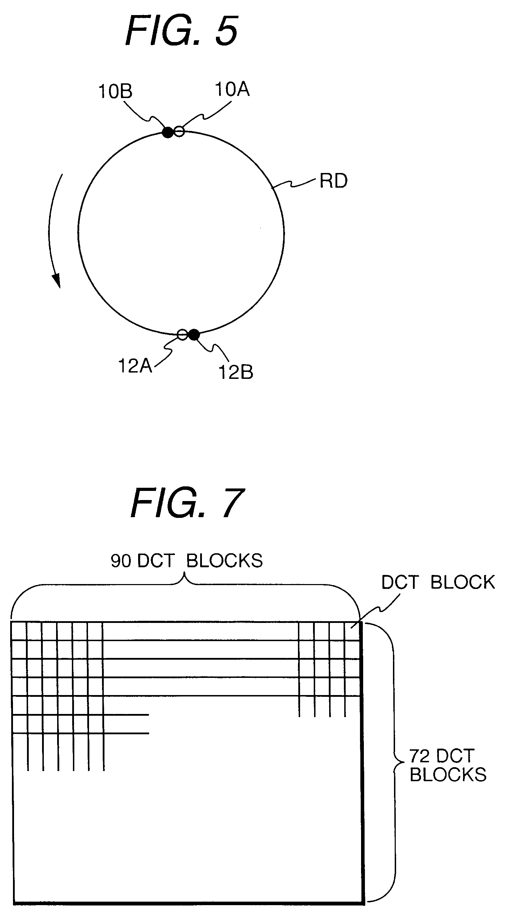

With reference to Fig. 5, the four magnetic heads are denoted by the characters "10A", "10B", "12A", and "12B" respectively. The magnetic heads 10A, 10B, 12A, and 12B are mounted on a rotary drum RD. The magnetic heads 10A and 10B are close to each other, forming a first pair. The magnetic heads 10A and 10B have a "+" azimuth angle and a "-" azimuth angle respectively. The magnetic heads 12A and 12B are close to each other, forming a second pair. The magnetic heads 12A and 12B have the "+" azimuth angle and the "-" azimuth angle respectively. The first pair and the second pair are opposed diametrically with respect to the rotary drum RD. In each of the first and second pairs, the position of the "+" azimuth head follows the position of the "-" azimuth head. In each of the first and second pairs, the position of the "+" azimuth head may precede the position of the "-" azimuth head.

As shown in Figs. 3 and 4, for a k-th frame, the sub segments of the digital video signal which correspond to the portions "1", "5", and "9" of a 1-frame picture are recorded on the magnetic tape MT by the "-" azimuth head 10B in the first pair while the sub segments of the digital video signal which correspond to the portions "2", "6", and "10" of the 1-frame picture are recorded on the magnetic tape MT by the "+" azimuth head 10A in the first pair. For the k-th frame, the sub segments of the digital video signal which correspond to the portions "3", "7", and "11" of the 1-frame picture are recorded on the magnetic tape MT by the "-" azimuth head 12B in the second pair while the sub segments of the digital video signal which correspond to the portions "4", "8", and "12" of the 1-frame picture are recorded on the magnetic tape MT by the "+" azimuth head 12A in the second pair.

For a (k+1)-th frame immediately following the k-th frame, the sub segments of the digital video signal which correspond to the portions "2", "6", and "10" of a 1-frame picture are recorded on the magnetic tape MT by the "-" azimuth head 10B in the first pair while the sub segments of the digital video signal which correspond to the portions "1", "5", and "9" of the 1-frame picture are recorded on the magnetic tape MT by the "+" azimuth head 10A in the first pair. For the (k+1)-th frame, the sub segments of the digital video signal which correspond to the portions "4", "8", and "12" of the 1-frame picture are recorded on the magnetic tape MT by the "-" azimuth head 12B in the second pair while the sub segments of the digital video signal which correspond to the portions "3", "7", and "11" of the 1-frame picture are recorded on the magnetic tape MT by the "+" azimuth head 12A in the second pair.

During reproduction (playback), for a k-th frame, the tracks "1", "5", and "9" on the magnetic tape MT are scanned by the "-" azimuth head 10B in the first pair while the tracks "2", "6", and "10" on the magnetic tape MT are scanned by the "+" azimuth head 10A in the first pair. For the k-th frame, the tracks "3", "7", and "11" on the magnetic tape MT are scanned by the "-" azimuth head 12B in the second pair while the tracks "4", "8", and "12" on the magnetic tape MT are scanned by the "+" azimuth head 12A in the second pair.

During reproduction, for a (k+1)-th frame immediately following the k-th frame, the tracks "2", "6", and "10" on the magnetic tape MT are scanned by the "-" azimuth head 10B in the first pair while the tracks "1", "5", and "9" on the magnetic tape MT are scanned by the "+" azimuth head 10A in the first pair. For the (k+1)-th frame, the tracks "4", "8", and "12" on the magnetic tape MT are scanned by the "-" azimuth head 12B in the second pair while the tracks "3", "7", and "11" on the magnetic tape MT are scanned by the "+" azimuth head 12A in the second pair.

Accordingly, during both reproduction (playback) and recording for the k-th frame, the "-" azimuth head 10B in the first pair corresponds to the portions "1", "5", and "9" of a 1-frame picture, and also corresponds to the tracks "1", "5", and "9" on the magnetic tape MT. The "+" azimuth head 10A in the first pair corresponds to the portions "2", "6", and "10" of the 1-frame picture, and also corresponds to the tracks "2", "6", and "10" on the magnetic tape MT. The "-" azimuth head 12B in the second pair corresponds to the portions "3", "7", and "11" of the 1-frame picture, and also corresponds to the tracks "3", "7", and "11" on the magnetic tape MT. The "+" azimuth head 12A in the second pair corresponds to the portions "4", "8", and "12" of the 1-frame picture, and also corresponds to the tracks "4", "8", and "12" on the magnetic tape MT.

During both reproduction and recording for the (k+1)-th frame, the "-" azimuth head 10B in the first pair corresponds to the portions "2", "6", and "10" of a 1-frame picture, and also corresponds to the tracks "2", "6", and "10" on the magnetic tape MT. The "+" azimuth head 10A in the first pair corresponds to the portions "1", "5", and "9" of the 1-frame picture, and also corresponds to the tracks "1", "5", and "9" on the magnetic tape MT. The "-" azimuth head 12B in the second pair corresponds to the portions "4", "8", and "12" of the 1-frame picture, and also corresponds to the tracks "4", "8", and "12" on the magnetic tape MT. The "+" azimuth head 12A in the second pair corresponds to the portions "3", "7", and "11" of the 1-frame picture, and also corresponds to the tracks "3", "7", and "11" on the magnetic tape MT.

In this way, the correspondence relation between the magnetic heads 10A, 10B, 12A, and 12B and the portions "1", "2", • • •, and "12" of a 1-frame picture changes frame by frame between two different states. The correspondence relation between the magnetic heads and the picture portions is thus in given connection with a frame number. Regarding each of sync blocks corresponding to a track, information of a related frame number is written into an ID (identification) portion thereof. A decision about which of portions of a 1-frame picture a signal reproduced from the magnetic tape MT via a magnetic head corresponds to is executed by referring to reproduced information of a related frame number.

It is now assumed that the "-" azimuth head 10B in the first pair fails. In this case, during recording for the k-th frame, information pieces of the portions "1", "5", and "9" of a 1-frame picture are not recorded on the magnetic tape MT while information pieces of the portions "2", "6", and "10" of the 1-frame picture are recorded on the magnetic tape MT. Further, during recording for the (k+1)-th frame (also the (k-1)-th frame), information pieces of the portions "2", "6", and "10" of a 1-frame picture are not recorded on the magnetic tape MT while information pieces of the portions "1", "5", and "9" of the 1-frame picture are recorded on the magnetic tape MT. During reproduction for the k-th frame, the unrecorded information pieces of the portions "1", "5", and "9" of the 1-frame picture can be estimated from reproduced effective information pieces of the "1", "5", and "9" of a neighboring 1-frame picture (for example, the immediately-preceding 1-frame picture, that is, the (k-1)-th-frame picture) by an inter-frame-correlation-based interpolation process. During reproduction for the (k+1)-th frame, the unrecorded information pieces of the portions "2", "6", and "10" of the 1-frame picture can be estimated from reproduced effective information pieces of the portions "2", "6", and "10" of a neighboring 1-frame picture (for example, the immediately-preceding 1-frame picture, that is, the k-th frame picture) by the inter-frame-correlation-based interpolation process. Accordingly, it is possible to compensate for the unrecorded information pieces in recovering complete 1-frame picture information.

A consideration will now be given of reproduction of normally-recorded information which is executed when the "-" azimuth head 10B in the first pair fails. In this case, during reproduction for the k-th frame, information pieces of the portions "1", "5", and "9" of a 1-frame picture are not reproduced from the magnetic tape MT while information pieces of the portions "2", "6", and "10" of the 1-frame picture are reproduced from the magnetic tape MT. Further, during reproduction for the (k+1)-th frame (also the (k-1)-th frame), information pieces of the portions "2", "6", and "10" of a 1-frame picture are not reproduced from the magnetic tape MT while information pieces of the portions "1", "5", and "9" of the 1-frame picture are reproduced from the magnetic tape MT. During reproduction for the k-th frame, the un-reproduced information pieces of the portions "1", "5", and "9" of the 1-frame picture can be estimated from reproduced effective information pieces of the "1", "5", and "9" of a neighboring 1-frame picture (for example, the immediately-preceding 1-frame picture, that is, the (k-1)-th-frame picture) by an inter-frame-correlation-based interpolation process. During reproduction for the (k+1)-th frame, the un-reproduced information pieces of the portions "2", "6", and "10" of the 1-frame picture can be estimated from reproduced effective information pieces of the portions "2", "6", and "10" of a neighboring 1-frame picture (for example, the immediately-preceding 1-frame picture, that is, the k-th frame picture) by the inter-frame-correlation-based interpolation process. Accordingly, it is possible to compensate for the unrecorded information pieces in recovering complete 1-frame picture information.

Regarding every portion of a 1-frame picture, a decision as to whether a related information piece should be recorded by a "+" azimuth head or a "-" azimuth head is executed in correspondence with a frame number. An example of the correspondence relation is as follows. In the case of even frame numbers, the portions "1", "3", "5", "7", "9", and "11" of a 1 -frame picture are designed to correspond to the "-" azimuth heads 10B and 12B while the portions "2", "4", "6", "8", "10", and "12" of the 1-frame picture are designed to correspond to the "+" azimuth heads 10A and 12A. In the case of odd frame numbers, the portions "1", "3", "5", "7", "9", and "11" of a 1-frame picture are designed to correspond to the "+" azimuth heads 10A and 12A while the portions "2", "4", "6", "8", "10", and "12" of the 1-frame picture are designed to correspond to the "-" azimuth heads 10B and 12B. During reproduction, reproduced information pieces can be rearranged into an original sequence by referring to the above-indicated correspondence relation.

As previously described, the correspondence relation between the magnetic heads 10A, 10B, 12A, and 12B and the portions "1", "2", • • •, and "12" of a 1-frame picture changes frame by frame between the two different states. In the change of the correspondence relation, the close magnetic heads 10A and 10B are exchanged about the relation with picture portions. Also, the close magnetic heads 12A and 12B are exchanged, Remote magnetic heads (magnetic heads in different pairs) are not exchanged. Accordingly, in comparison with the related-art arrangement of Figs. 1 and 2, for each of alternate frames, only recorded information pieces in two neighboring tracks in each pair are exchanged. Thus, during reproduction or playback at a high speed (for example, search), the quality of reproduced pictures on a display is approximately equal to that available in the related-art arrangement of Figs. 1 and 2.

As previously described, the magnetic heads 10A, 10B, 12A, and 12B and the portions "1", "2", • • •, and "12" of a 1-frame picture are in a given correspondence relation which changes frame by frame between the two different states. The correspondence relation is made in connection with a frame number. Regarding each of sync blocks corresponding to a track, information of a related frame number is written into an ID (identification) portion thereof. Even during high-speed reproduction or high-speed playback (for example, search) where the magnetic heads 10A, 10B, 12A and 12B obliquely move across tracks on the magnetic tape MT, information of a frame number is reproduced from segments of every track which correspond to sync blocks. Accordingly, a decision about which of portions of a 1-frame picture a signal reproduced from the magnetic tape MT via a magnetic head corresponds to is executed by referring to reproduced information of a related frame number. For compensating an error in ID information, it is preferable to use decision by majority in determining a final reproduced frame number on the basis of the frame numbers (candidate frame numbers) detected from the respective sync blocks.

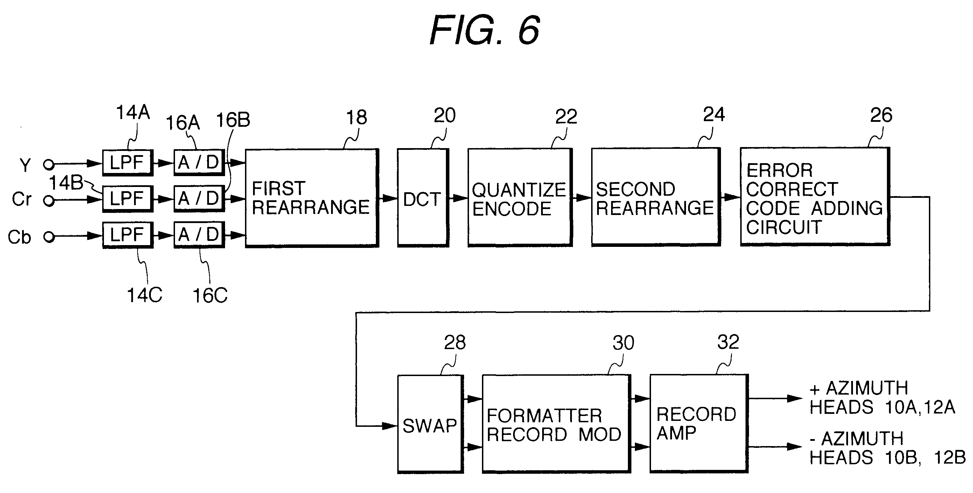

Fig. 6 shows a recording apparatus. As shown in Fig. 6, component video signals (Y, Cr, and Cb signals) of a given television system such as a PAL television system or an NTSC television system are applied to low pass filters (LPF's) 14A, 14B, and 14C respectively, being band-limited thereby for anti-aliasing. Here, the Cr signal means an R-Y signal while the Cb signal means an B-Y signal. The PAL television system agrees with a 625/50 television system while the NTSC television system agrees with a 525/60 television system. The output signals of the low pass filters 14A, 14B, and 14C are fed to analog-to-digital (A/D) converters 16A, 16B, and 16C, being converted thereby into corresponding digital component video signals (digital Y, Cr, and Cb signals) respectively. The analog-to-digital conversion includes sampling in conformity with, for example, the "ITU-R BT601" standards. The ratio, in number of samples per given-size segment of a 1-frame area, among the digital Y signal, the digital Cr signal, and the digital Cb signal is 4:2:2.

A first rearranging circuit 18 receives the digital Y, Cr, and Cb signals from the A/D converters 16A, 16B, and 16C. For every frame, the first rearranging circuit 18 selects given signal samples as information to be recorded from among all the signal samples represented by the digital Y, Cr, and Cb signals. Specifically, 720 samples represented by the digital Y signal, 360 samples represented by the digital Cr signal, and 360 samples represented by the digital Cb signal are selected in a horizontal direction. Further, in the case of the PAL television system, 576 lines (horizontal scanning lines) represented by the digital Y, Cr, and Cb signals are selected in a vertical direction. Accordingly, for every frame, all the selected samples represented by the digital Y signal correspond to a two-dimensional area of 720 pixels (in the horizontal direction) by 576 lines (in the vertical direction). On the other hand, for every frame, all the selected samples represented by the digital Cr or Cb signal correspond to a two-dimensional area of 360 pixels (in the horizontal direction) by 576 lines (in the vertical direction).

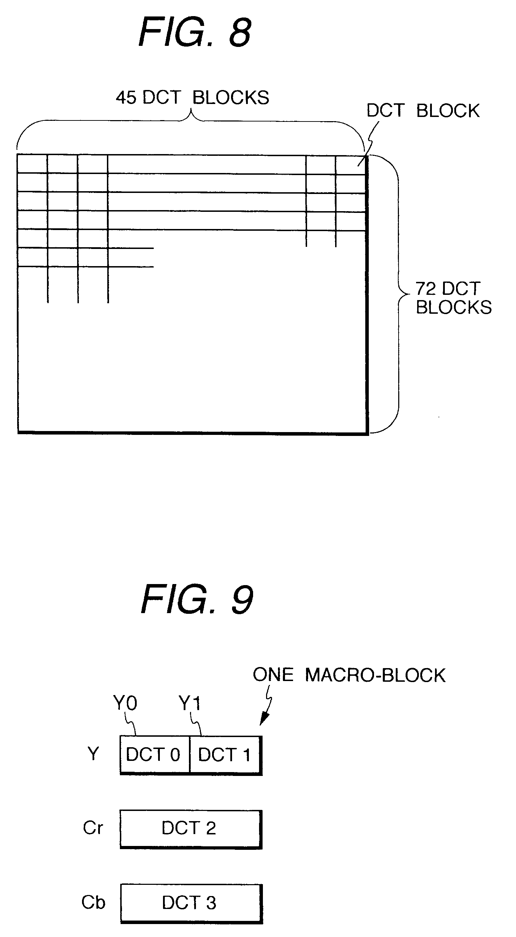

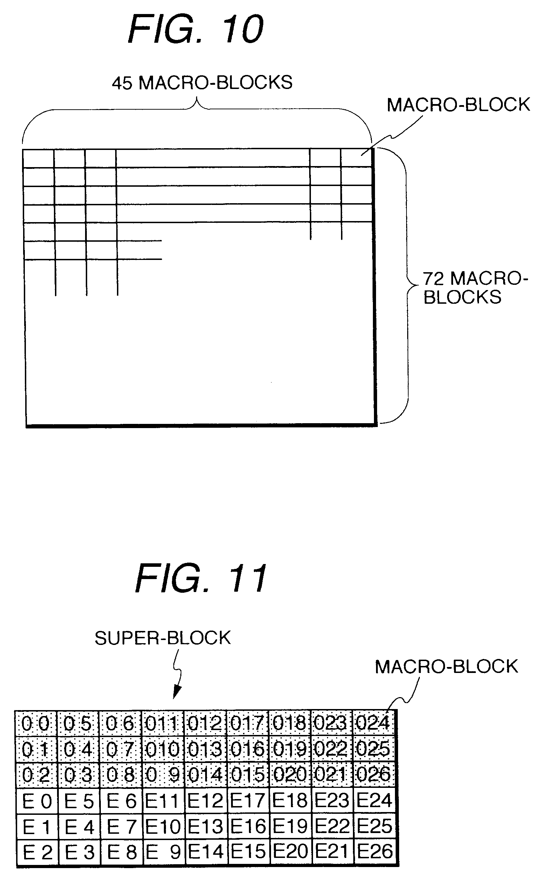

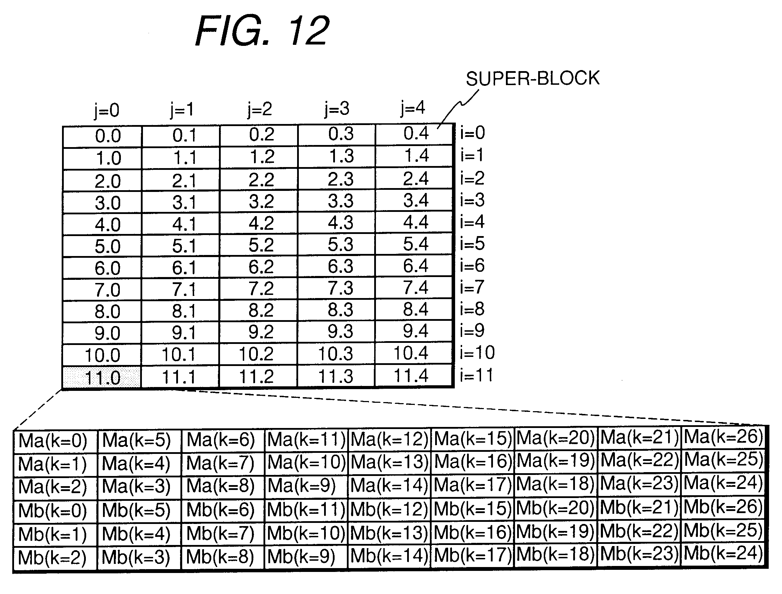

DCT blocks, micro-blocks, super-blocks, and video segments for a 1-frame picture are defined as follows. As shown in Fig. 7, every 1-frame picture composed of selected samples (pixels) represented by the digital Y signal are divided into DCT blocks each having 64 neighboring pixels, that is, 8 pixels (in the horizontal direction) by 8 pixels (in the vertical direction). Thus, in the case of the PAL television system, every 1-frame picture related to the digital Y signal is composed of 90 DCT blocks (in the horizontal direction) by 72 DCT blocks (in the vertical direction). As shown in Fig. 8, every 1-frame picture composed of selected samples (pixels) represented by the digital Cr or Cb signal are divided into DCT blocks each having 64 neighboring pixels, that is, 8 pixels (in the horizontal direction) by 8 pixels (in the vertical direction). Thus, in the case of the PAL television system, every 1-frame picture related to the digital Cr or Cb signal is composed of 45 DCT blocks (in the horizontal direction) by 72 DCT blocks (in the vertical direction). As shown in Fig. 9, every macro-block is composed of two horizontally-neighboring DCT blocks related to the digital Y signal, one DCT block related to the digital Cr signal, and one DCT block related to the digital Cb signal. Two Y-information DCT blocks, one Cr-information DCT block, and one Cb-information DCT block composing one macro-block are equal in position relative to a 1-frame picture. Two Y-information DCT blocks in every macro-block are identified by the characters "Y0" and "Y1" respectively. Thus, as shown in Fig. 10, an array of 45 macro-blocks (in the horizontal direction) by 72 macro-blocks (in the vertical direction) constitutes a 1-frame picture in the PAL television system. It should be noted that an array of 45 macro-blocks (in the horizontal direction) by 60 macro-blocks (in the vertical direction) constitutes a 1-frame picture in the NTSC television system. As shown in Fig. 11, 54 neighboring macro-blocks, that is, 9 macro-blocks (in the horizontal direction) by 6 macro-blocks (in the vertical direction) compose one super-block. Numbers "00", "01", · · ·, "026" are assigned to the respective macro-blocks composing the upper half of every super-block in a zigzag order. On the other hand, characters "E0", "E1", · · ·, "E26" are assigned to the respective macro-blocks composing the lower half of every super-block in a zigzag order. Thus, as shown in Fig. 12, an array of 5 super-blocks (in the horizontal direction) by 12 super-blocks (in the vertical direction) constitutes a 1-frame picture of the PAL television system. It should be noted that an array of 5 super-blocks (in the horizontal direction) by 10 super-blocks (in the vertical direction) constitutes a 1-frame picture of the NTSC television system. A video segment is composed of 5 micro-blocks.

As shown in Fig. 12, super-blocks composing a 1-frame picture are identified by number pairs (i, j) corresponding to the positions of the super-blocks relative to the 1-frame picture. In the case of the PAL television system, different numbers "i" of "0", "1", "2", · · ·, and "11" are sequentially assigned to the highest horizontal row to the lowest horizontal row respectively. Different numbers "j" of "0", "1", · · ·, and "4" are sequentially assigned to the left-end vertical column to the right-end vertical column respectively. As shown in Fig. 12, macro-blocks composing an upper half of every super-block are identified by numbers "k" depending on the positions of the macro-blocks relative to the super-block. Different numbers "k" of "0", "1", "2", · · ·, and "26" are assigned to the respective macro-blocks composing the upper half of the super-block in a zigzag order. Similarly, macro-blocks composing a lower half of every super-block are identified by numbers "k" depending on the positions of the macro-blocks relative to the super-block. Different numbers "k" of "0", "1", "2", · · ·, and "26" are assigned to the respective macro-blocks composing the lower half of the super-block in a zigzag order. Therefore, macro-blocks composing every 1-frame picture are identified by characters $Ma_{i,j,k}$ and $Mb_{i,j,k}$. As shown in Fig. 12, "Ma" denotes macro-blocks in upper halves of super-blocks while "Mb" denotes macro-blocks in lower halves of super-blocks. A macro-block $Ma_{i,j,k}$ is in a position "k" within an upper half of a super-block (i, j). A macro-block $Mb_{i,j,k}$ is in a position "k" within a lower half of a super-block (i, j).

Each of video segments composing a 1-frame picture is composed of 5 micro-blocks which are selected from among all the micro-blocks according to given rearrangement. Video segments composing every 1-frame picture are denoted by characters $Va_{i,k}$ and $Vb_{i,k}$. Specifically, five micro-blocks composing a video segment $Va_{i,k}$ or $Vb_{i,k}$ are expressed as follows.

$$Va_{i,k} = \{Ma_{(i+2) \bmod n, 2, k}; Ma_{(i+6) \bmod n, 1, k}; Ma_{(i+8) \bmod n, 3, k}; Ma_{i \bmod n, 0, k}; Ma_{(i+4) \bmod n, 4, k}\}$$

$$Vb_{i,k} = \{Mb_{(i+2) \bmod n, 2, k}; Mb_{(i+6) \bmod n, 1, k}; Mb_{(i+8) \bmod n, 3, k}; Mb_{i \bmod n, 0, k}; Mb_{(i+4) \bmod n, 4, k}\}$$

where n = 12 (in the case of the PAL television system or the 625/50 television system), and "$\alpha \bmod \beta$" means the remainder in division of a number "$\alpha$" by a number "$\beta$". It should be noted that n = 10 in the case of the NTSC television system or the 525/60 television system.

The first arranging circuit 18 includes memories, devices for writing segments (samples) of the digital Y, Cr, and Cb signals into the memories, and devices for reading out signal segments (samples) from the memories. The readout devices are designed to implement the previously-indicated rearrangement. For every frame, video segments $Va_{0,0}$,

$Vb_{0,0}, \cdot \cdot \cdot, Va_{11,26}$, and $Vb_{11,26}$ are sequentially transferred from the first rearranging circuit 18 to a DCT circuit 20. The signal transfer from the first rearranging circuit 18 to the DCT circuit 20 is executed sample by sample.

The DCT circuit 20 subjects the received signal to discrete cosine transform for every DCT block. The DCT circuit 20 outputs the transform-resultant signal to a quantizing and variable-length encoding circuit 22. The quantizing and variable-length encoding circuit 22 quantizes the transform-resultant signal, and encodes the quantization-resultant signal into a corresponding signal of a given variable-length code. The quantizing and variable-length encoding circuit 22 compresses the transform-resultant signal, and therefore reduces the bit rate through the quantizing and encoding processes. The compression of the transform-resultant signal is controlled so that a data amount (the total number of bits) per video segment will be equal to a fixed amount. The quantizing and variable-length encoding circuit 22 outputs the signal of the variable-length code to a second rearranging circuit 24.

Regarding the output signal of the quantizing and variable-length encoding circuit 22 which is received by the second rearranging circuit 24, data pieces (signal pieces) are arranged in video-segment order. The second rearranging circuit 24 rearranges data pieces represented by the received signal into a sequence or an order suited to record on magnetic-tape tracks.

A unit (a data portion related to the video signal in one sync block) and the structure of magnetic-tape tracks are defined as follows. A data piece per video segment, which is represented by the output signal of the quantizing and variable-length encoding circuit 22, corresponds to 5 units. Similar to macro-blocks, units composing every 1-frame picture are identified by characters $Ua_{i,j,k}$ and $Ub_{i,j,k}$. Regarding the output signal of the quantizing and variable-length encoding circuit 22, five units composing a video segment $Va_{i,k}$ or $Vb_{i,k}$ are expressed as follows.

$$Va_{i,k} = \{Ua_{(i+2) \bmod n, 2, k}; Ua_{(i+6) \bmod n, 1, k}; Ua_{(i+8) \bmod n, 3, k}; Ua_{i \bmod n, 0, k}; Ua_{(i+4) \bmod n, 4, k}\}$$

$$Vb_{i,k} = \{Ub_{(i+2) \bmod n, 2, k}; Ub_{(i+6) \bmod n, 1, k}; Ub_{(i+8) \bmod n, 3, k}; Ub_{i \bmod n, 0, k}; Ub_{(i+4) \bmod n, 4, k}\}$$

where $n = 12$ (in the case of the PAL television system or the 625/50 television system); $i = 0, 1, 2, \cdot \cdot \cdot, 11$ (in the case of the PAL television system or the 625/50 television system); and $k = 0, 1, 2, \cdot \cdot \cdot, 26$. It should be noted that $n = 10$ and $i = 0, 1, 2, \cdot \cdot \cdot, 9$ in the case of the NTSC television system or the 525/60 television system, Generally, a unit $Ua_{i,j,k}$ contains a macro-block $Ma_{i,j,k}$. In some cases, a unit $Ua_{i,j,k}$ contains a macro-block $Ma_{i,j,k}$ and also a part of another macro-block. Similarly, a unit $Ub_{i,j,k}$ contains a macro-block $Mb_{i,j,k}$. In some cases, a unit $Ub_{i,j,k}$ contains a macro-block $Mb_{i,j,k}$ and also a part of another macro-block.

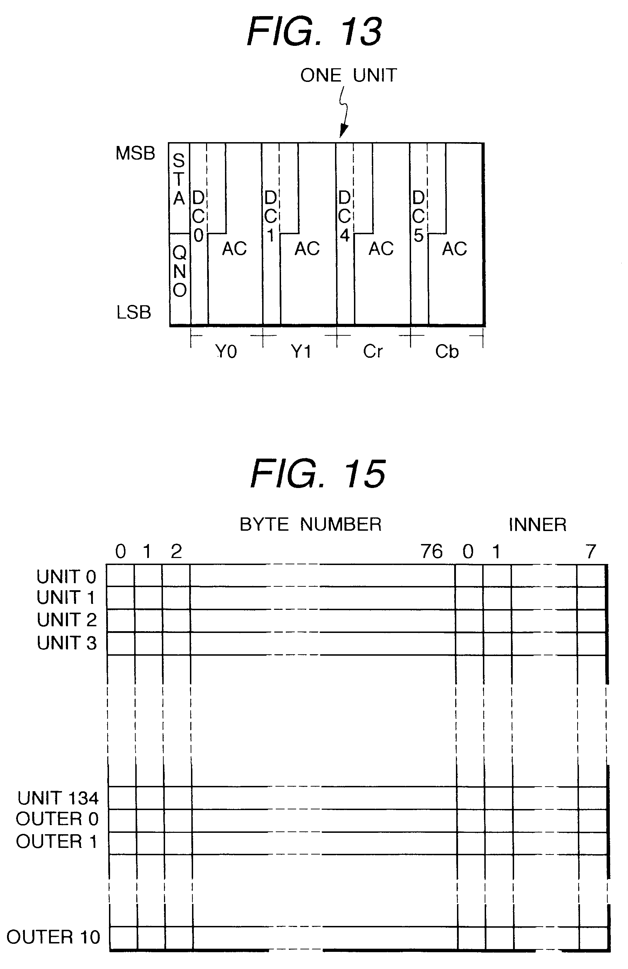

As shown in Fig. 13, one unit is composed of a Y0 information piece, a Y1 information piece, a Cr information piece, a Cb information piece, an information piece STA, and an information piece QNO. Each of the Y0 information piece, the Y1 information piece, the Cr information piece, and the Cb information piece has a segment representing a DC coefficient resulting from the DCT transform, and also segments representing AC coefficients resulting from the DCT transform. The information piece STA is used as a flag representing conditions of a related unit, for example, a flag representing whether or not an error is present in a related unit. The information piece QNO represents conditions of weighting elements in the DCT transform.

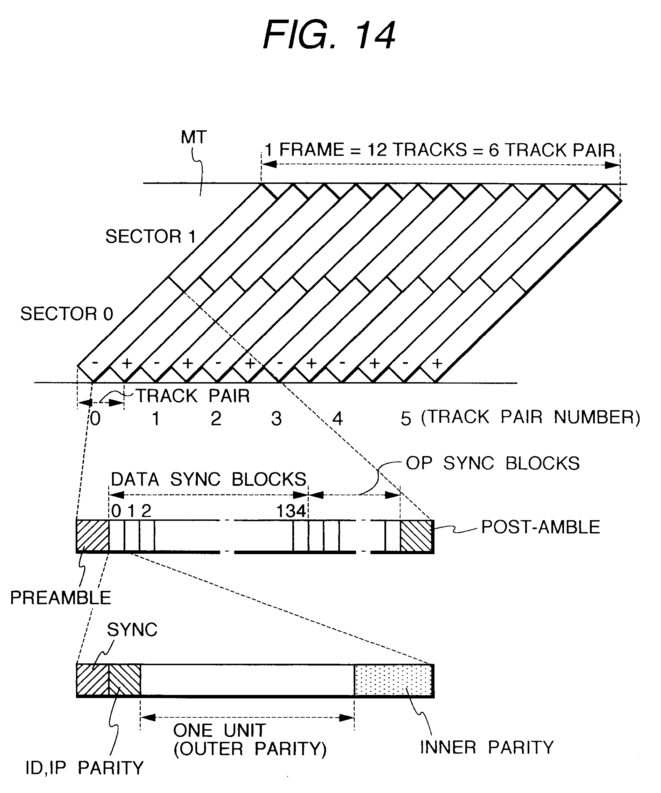

As shown in Fig. 14, one frame corresponds to 12 successive magnetic-tape tracks composed of 6 pairs of two neighboring tracks. The 6 track pairs are identified by respective order numbers (0, 1, 2, 3, 4, and 5). Each track has two sectors, that is, a sector "0" and a sector "1". Each sector stores a sequence of a preamble, 135 unit-containing sync blocks (data sync blocks), 11 outer-parity-containing sync blocks (OP sync blocks), and a post-amble. Each of one unit-containing sync block and one outer-parity-containing sync block has a sequence of a sync-pattern information piece, an ID information piece and an IP parity information piece, a unit or an outer-parity information piece, and an inner-parity information piece.

The second rearranging circuit 24 executes data-piece rearrangement which provides the following assignment of units to data sync blocks. A unit $Ua_{2i,j,k}$ is assigned to a $(27j+k)$-th sync block in a sector "0" of a "-" azimuth track in an i-th track pair. A unit $Ua_{2i+1,j,k}$ is assigned to a $(27j+k)$-th sync block in a sector "1" of a "-" azimuth track in an i-th track pair. A unit $Ub_{2i,j,k}$ is assigned to a $(27j+k)$-th sync block in a sector "0" of a "+" azimuth track in an i-th track pair. A unit $Ub_{2i+1,j,k}$ is assigned to a $(27j+k)$-th sync block in a sector "1" of a "+" azimuth track in an i-th track pair. Here, $i = 0, 1, \cdot \cdot \cdot, n-1$, and $n = 6$ (in the case of the PAL television system or the 625/50 television system). Further, $j = 0, 1, \cdot \cdot \cdot, 4$, and $k = 0, 1, \cdot \cdot \cdot, 26$.

The data-piece rearrangement executed by the second rearranging circuit 24 enables super-blocks (0, 0), (0, 1), $\cdot \cdot \cdot$, (i, j), $\cdot \cdot \cdot$, (11, 4) to be sequentially recorded on the magnetic tape MT. Further, for each super-block, macro-blocks E0, $\cdot \cdot \cdot$, E26 are enabled to be sequentially recorded on a "+" azimuth track while macro-blocks 00, $\cdot \cdot \cdot$, 026 are enabled to be sequentially recorded on a "-" azimuth track in the absence of a swap circuit 28 which will be described later. The second rearranging circuit 24 outputs the rearrangement-resultant signal to an error correction code adding circuit 26.

The second rearranging circuit 24 includes memories, devices for writing segments of the output signal of the quantizing and variable-length encoding circuit 22 into the memories, and devices for reading out signal segments (samples) from the memories, The readout devices are designed to implement the previously-indicated rearrangement.

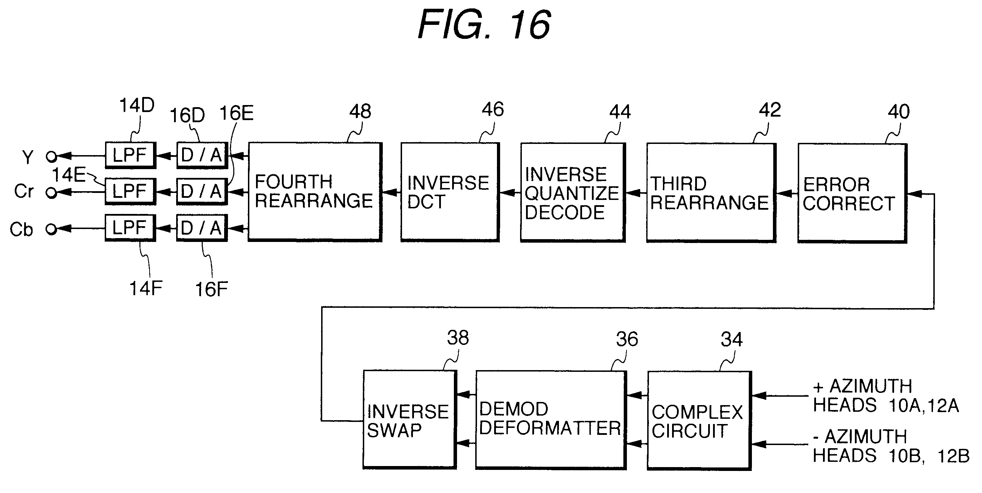

The error correction code adding circuit 26 adds an inner code (inner-parity information or inner error checking and correcting information) and an outer code (outer-parity information or outer error checking and correcting information) to the output signal of the second rearranging circuit 24. Specifically, outer code words are added for data segments with equal byte numbers which compose respective units. The added outer code words form 11 outer-parity-containing sync blocks (OP sync blocks). In addition, as shown in Fig. 15, an inner code word is added for each of units or outer code information pieces. The error correction code adding circuit 26 outputs the addition-resultant signal to a swap circuit 28.

For every frame, the swap circuit 28 divides the output signal of the error correction code adding circuit 26 into a first data sequence assigned to "+" azimuth tracks and a second data sequence assigned to "-" azimuth tracks. Specifically, for every even-numbered frame, macro-blocks E0, · · ·, E26 in each super-block are assigned to a "-" azimuth track while macro-blocks 00, · · ·, 026 are assigned to a "+" azimuth track. On the other hand, for every odd-numbered frame, macro-blocks E0, · · ·, E26 in each super-block are assigned to a "+" azimuth track while macro-blocks 00, · · ·, 026 are assigned to a "-" azimuth track. Accordingly, the swap circuit 28 enables exchange between recorded information pieces in two neighboring tracks in each pair frame by frame. In other words, for each of first alternate frames, the sub segments of the digital video signal which correspond to the portions "1", "3", "5", "7", "9", and "11" of a 1-frame picture are assigned to "-" azimuth tracks while the sub segments of the digital video signal which correspond to the portions "2", "4", "6", "8", "10", and "12" of the 1-frame picture are assigned to "+" azimuth tracks (see Figs. 3 and 4). For each of second alternate frames different from the first alternate frames, the sub segments of the digital video signal which correspond to the portions "1", "3", "5", "7", "9", and "11" of a 1-frame picture are assigned to "+" azimuth tracks while the sub segments of the digital video signal which correspond to the portions "2", "4", "6", "8", "10", and "12" of the 1-frame picture are assigned to "-" azimuth tracks (see Figs. 3 and 4). The swap circuit 28 outputs the first and second data sequences to a formatter and record modulation circuit 30.

For example, the swap circuit 28 includes a section (a frame-number information extractor) for extracting information of a frame number, and a switch responsive to the extracted frame-number information for implementing the frame-dependent signal dividing process.

The formatter and record modulation circuit 30 receives the first and second data sequences from the swap circuit 28. The formatter and record modulation circuit 30 adds a sync signal and an ID signal to every unit or every outer code information piece, represented by each of the first and second data sequences, to complete a unit-containing sync block or an outer-parity-containing sync block. The formatter and record modulation circuit 30 subjects the resultant data sequences to modulation for record on the magnetic tape MT. One of the modulation-resultant signals which is assigned to "+" azimuth tracks is fed from the formatter and record modulation circuit 30 to the "+" azimuth heads 10A and 12A via a recording amplifier 32 before being recorded on the magnetic tape MT by the "+" azimuth heads 10A and 12A. The other modulation-resultant signal which is assigned to "-" azimuth tracks is fed from the formatter and record modulation circuit 30 to the "-" azimuth heads 10B and 12B via the recording amplifier 32 before being recorded on the magnetic tape MT by the "-" azimuth heads 10B and 12B.

The ID signal added by the formatter and record modulation circuit 30 contains information of a frame number depending on whether a related frame is of a first type in which the portions "1", "3", "5", "7", "9", and "11" of a 1-frame picture are assigned to "-" azimuth tracks or a second type in which the portions "1", "3", "5", "7", "9", and "11" of a 1-frame picture arc assigned to "+" azimuth tracks. For example, an even frame number corresponds to conditions where the portions "1", "3", "5", "7", "9", and "11" of a 1-frame picture are assigned to "-" azimuth tracks. On the other hand, an odd frame number corresponds to conditions where the portions "1", "3", "5", "7", "9", and "11" of a 1-frame picture are assigned to "+" azimuth tracks. For even-numbered frames, the data sequence corresponding to the portions "1", "3", "5", "7", "9", and "11" of a 1-frame picture is transmitted from the swap circuit 28 to the "-" azimuth heads 10B and 12B via the formatter and record modulation circuit 30 and the recording amplifier 32 while the data sequence corresponding to the portions "2", "4", "6", "8", "10", and "12" of the 1-frame picture is transmitted from the swap circuit 28 to the "+" azimuth heads 10A and 12A via the formatter and record modulation circuit 30 and the recording amplifier 32. For odd-numbered frames, the data sequence corresponding to the portions "1", "3", "5", "7", "9", and "11" of a 1-frame picture is transmitted from the swap circuit 28 to the "+" azimuth heads 10A and 12A via the formatter and record modulation circuit 30 and the recording amplifier 32 while the data sequence corresponding to the portions "2", "4", "6", "8", "10", and "12" of the 1-frame picture is transmitted from the swap circuit 28 to the "-" azimuth heads 10B and 12B via the formatter and record modulation circuit 30 and the recording amplifier 32. In general, the ID signal added by the formatter and record modulation circuit 30 contains information of a related track number.

Fig. 16 shows a reproducing apparatus. The recording apparatus of Fig. 6 and the reproducing apparatus of Fig. 16 may be combined into a recording and reproducing apparatus. With reference to Fig. 16, signals reproduced from a magnetic tape MT via magnetic heads 10A, 10B, 12A, and 12B (see Fig. 5) are fed to a complex circuit 34. The complex circuit 34 includes reproducing amplifiers which enlarge the reproduced signals. The complex circuit 34 also has sections which subject the amplification-resultant signals to waveform equalizing processes. Further, the complex circuit 34 has PLL data strobe sections which recover first and second data sequences (first and second bit sequences) from the equalization-resultant signals. The complex circuit 34 outputs the first and second recovered data sequences to a deformatter and demodulation circuit 36.

The first data sequence outputted by the complex circuit 34 originates from signals reproduced from "+" azimuth tracks on the magnetic tape MT via the "+" azimuth heads 10A and 12A. On the other hand, the second data sequence outputted by the complex circuit 34 originates from signals reproduced from "-" azimuth tracks on the magnetic tape MT via the "-" azimuth heads 10B and 12B. The first and second data sequences outputted by the complex circuit 34 correspond to the output signals of the formatter and record modulation circuit 30 in Fig. 6.

The deformatter and demodulation circuit 36 receives the recovered data sequences from the complex circuit 34. The deformatter and demodulation circuit 36 has sections which subject the recovered data sequences to sync detection and demodulation. ID protective sections of the deformatter and demodulation circuit 36 recover reliability-enhanced ID signals from signals generated as a result of the sync detection and the demodulation. The deformatter and demodulation circuit 36 generates and outputs first and second data sequences through the previously-indicated signal processing.

The first data sequence outputted by the deformatter and demodulation circuit 36 originates from the signals reproduced from "+" azimuth tracks on the magnetic tape MT via the "+" azimuth heads 10A and 12A. On the other hand, the second data sequence outputted by the deformatter and demodulation circuit 36 originates from the signals reproduced from "-" azimuth tracks on the magnetic tape MT via the "-" azimuth heads 10B and 12B. Accordingly, the first and second data sequences outputted by the deformatter and demodulation circuit 36 correspond to the first and second data sequences outputted by the swap circuit 28 in Fig. 6. The first and second data sequences outputted by the deformatter and demodulation circuit 36 are applied to an inverse swap circuit 38.

Operation of the inverse swap circuit 38 is inverse with respect to the operation of the swap circuit 28 in Fig. 6. The inverse swap circuit 38 receives the first and second data sequences from the deformatter and demodulation circuit 36. The inverse swap circuit 38 combines the first and second received data sequences into a composite signal. The inverse swap circuit 38 exchanges information pieces reproduced from two neighboring "+" and "-" azimuth tracks in each pair frame by frame to recover the original information-piece order. The inverse swap circuit 38 executes the information-piece exchange in response to reproduced ID information (reproduced information of a frame number) which is generated by and transmitted from the deformatter and demodulation circuit 36. The inverse swap circuit 38 outputs the composite signal to an error correction circuit 40. The output signal of the inverse swap circuit 38 corresponds to the output signal of the error correction code adding circuit 26 in Fig. 6. For example, the inverse swap circuit 38 includes a multiplexer or a switch responsive to the reproduced ID information (the reproduced frame-number information) for implementing the frame-dependent signal combining process.

The error correction circuit 40 detects errors in the output signal of the inverse swap circuit 38, and corrects the errors according to the error checking and correcting information added by the error correction code adding circuit 26 in Fig. 6. The error correction circuit 40 outputs the error-correction-resultant signal to a third rearranging circuit 42. The output signal of the error correction circuit 40 corresponds to the output signal of the second rearranging circuit 24 in Fig. 6.

The error correction circuit 40 includes a frame memory which temporarily stores every 1-frame segment of the error-correction-resultant signal. When errors in information of a portion of a current frame which is reproduced from a given track can not be corrected, information of the same portion of the immediately-preceding frame is read out from the memory and the readout information is used in place of the erroneous information.

The third rearranging circuit 42 rearranges data pieces represented by the output signal of the error correction circuit 40. The data-piece rearrangement executed by the third rearranging circuit 42 is inverse with respect to the data-piece rearrangement executed by the second rearranging circuit 24 in Fig. 6. The third rearranging circuit 42 outputs the rearrangement-resultant signal to an inversely quantizing and decoding circuit 44. The output signal of the third rearranging circuit 42 corresponds to the output signal of the quantizing and variable-length encoding circuit 22 in Fig. 6.

The third arranging circuit 42 includes memories, devices for writing segments of the output signal of the error correction circuit 40 into the memories, and devices for reading out signal segments (samples) from the memories. The readout devices are designed to implement the previously-indicated rearrangement.

The inversely quantizing and decoding circuit 44 subjects the output signal of the third arranging circuit 42 to a decoding process which matches the encoding process executed by the quantizing and variable-length encoding circuit 22 in Fig. 6. The inversely quantizing and decoding circuit 44 subjects the decoding-resultant signal to inverse quantization which matches the quantization executed by the quantizing and variable-length encoding circuit 22 in Fig. 6. The operation of the inversely quantizing and decoding circuit 44 is inverse with respect to the operation of the quantizing and variable-length encoding circuit 22 in Fig. 6. The inversely quantizing and decoding circuit 44 outputs the inverse-quantization-resultant signal to an inverse DCT circuit 46. The output signal of the inversely quantizing and decoding circuit 44 corresponds to the output signal of the DCT circuit 20 in Fig. 6.

The inverse DCT circuit 46 subjects the output signal of the inversely quantizing and decoding circuit 44 to inverse discrete cosine transform which matches the discrete cosine transform executed by the DCT circuit 20 in Fig. 6. The operation of the inverse DCT circuit 46 is inverse with respect to the operation of the DCT circuit 20 in Fig. 6. The inverse DCT circuit 46 outputs the transform-resultant signal to a fourth rearranging circuit 48. The output signal of the inverse DCT circuit 46 corresponds to the output signal of the first rearranging circuit 18 in Fig. 6.

The fourth rearranging circuit 48 separates the output signal of the inverse DCT circuit 46 into digital Y, Cr, and Cb signals. The fourth rearranging circuit 48 outputs the digital Y, Cr, and Cb signals to digital-to-analog (D/A) converters 16D, 16E, and 16F respectively. The operation of the fourth rearranging circuit 48 is inverse with respect to the operation of the first rearranging circuit 18 in Fig. 6.

The digital Y, Cr, and Cb signals are converted by the D/A converters 16D, 16E, and 16F into corresponding analog Y, Cr, and Cb signals respectively. The analog Y, Cr, and Cb signals are fed from the D/A converters 16D, 16E, and 16F to low pass filters 14D, 14E, and 14F respectively. The analog Y, Cr, and Cb signals are processed by the low pass filters 14D, 14E, and 14F into recovered Y, Cr, and Cb signals respectively.

It should be noted that "frame" may replaced by "field" in the embodiment of this invention. Thus, the previously-mentioned frame-by-frame processing may be replaced by field-by-field processing.

## Claims

1. A video signal recording apparatus comprising:

first means for dividing a video signal into portions for every frame or every field, said video signal portions corresponding to different regions in a 1-frame picture or a 1-field picture respectively, said video signal portions including first and second video signal portions;

first and second magnetic heads having different azimuths respectively;

second means for, during a first frame or a first field, recording said first video signal portion on a recording medium via the first magnetic head along a first track, and recording said second video signal portion on the recording medium via the second magnetic head along a second track neighboring the first track; and

third means for, during a second frame different from the first frame or a second field different from the first field, recording said first video signal portion on the recording medium via the second magnetic head along a third track, and recording said second video signal portion on the recording medium via the first magnetic head along a fourth track neighboring the third track.

2. The video signal recording apparatus of claim 1, wherein the video signal is of a digital type.

3. The video signal recording apparatus of claim 1 or claim 2, wherein the first frame and the second frame neighbor each other along a time base, or the first field and the second field neighbor each other along a time base.

4. The video signal recording apparatus of claim 1, 2 or 3, wherein the of the first video signal portion and the second video signal portion includes information about whether the present video signal portion relates to the first frame or the second frame, or information about whether the present video signal portion relates to the first field or the second field.

5. A video signal reproducing apparatus comprising:

first and second magnetic heads having different azimuths respectively;

first means for, during a first frame or a first field, reproducing a first video signal portion from a recording medium via the first magnetic head along a first track, and reproducing a second video signal portion from the recording medium via the second magnetic head along a second track neighboring the first track;

second means for, during the first frame or the first field, making the first video signal portion and the second video signal portion into correspondence with first and second different regions in a 1-frame picture or a 1-field picture respectively;

third means for, during a second frame different from the first frame or a second field different from the first field, reproducing a third video signal portion from the recording medium via the first magnetic head along a third track, and reproducing a fourth video signal portion from the recording medium via the second magnetic head along a fourth track neighboring the third track; and

fourth means for, during the second frame or the second field, making the fourth video signal portion and the third video signal portion into correspondence with the first and second different regions in a 1-frame picture or a 1-field picture respectively.

6. The video signal reproducing apparatus of claim 5, wherein the first, second, third, and fourth video signal portions are of a digital type.

7. The video signal reproducing apparatus of claim 5 or claim 6, wherein the first frame and the second frame neighbor each other along a time base, or the first field and the second field neighbor each other along a time base.

8. The video signal recording apparatus of claim 5, 6 or 7, wherein each of the first, second, third, and fourth video signal portions includes information about whether the present video signal portion relates to the first frame or the second frame, or information about whether the present video signal portion relates to the first field or the second field, and wherein the second means is responsive to the information in the first video signal portion and the information in the second video signal portion, and the fourth means is responsive to the information in the third video signal portion and the information of the fourth video signal portion.

# *FIG. 1*

1-FRAME PICTURE

# *FIG. 2*

1 FRAME = 12 TRACKS

MAGNETIC TAPE

# FIG. 3

(k-1)-th FRAME PICTURE    k-th FRAME PICTURE    (k+1)-th FRAME PICTURE

PORTIONS RECORDED AND REPRODUCED BY SAME HEAD

# FIG. 4

k-th FRAME

1 FRAME = 12 TRACKS

(k+1)-th FRAME

1 FRAME = 12 TRACKS

MT

1  2          11  12  1  2          11  12  (TRACK NUMBER)

EP 0 717 563 A2

## FIG. 5

## FIG. 7

## FIG. 6

Block diagram: Y, Cr, Cb inputs each through LPF (14A, 14B, 14C) and A/D (16A/16B, 16C) into FIRST REARRANGE (18) → DCT (20) → QUANTIZE ENCODE (22) → SECOND REARRANGE (24) → ERROR CORRECT CODE ADDING CIRCUIT (26) → SWAP (28) → FORMATTER RECORD MOD (30) → RECORD AMP (32) → + AZIMUTH HEADS 10A,12A and − AZIMUTH HEADS 10B, 12B

EP 0 717 563 A2

# FIG. 8

45 DCT BLOCKS

DCT BLOCK

72 DCT BLOCKS

# FIG. 9

ONE MACRO-BLOCK

Y0   Y1

Y   | DCT 0 | DCT 1 |

Cr  | DCT 2 |

Cb  | DCT 3 |

# FIG. 10

45 MACRO-BLOCKS

MACRO-BLOCK

72 MACRO-BLOCKS

# FIG. 11

SUPER-BLOCK

MACRO-BLOCK

| 0 0 | 0 5 | 0 6 | 011 | 012 | 017 | 018 | 023 | 024 |
|------|------|------|------|------|------|------|------|------|
| 0 1 | 0 4 | 0 7 | 010 | 013 | 016 | 019 | 022 | 025 |
| 0 2 | 0 3 | 0 8 | 0 9 | 014 | 015 | 020 | 021 | 026 |
| E 0 | E 5 | E 6 | E11 | E12 | E17 | E18 | E23 | E24 |
| E 1 | E 4 | E 7 | E10 | E13 | E16 | E19 | E22 | E25 |
| E 2 | E 3 | E 8 | E 9 | E14 | E15 | E20 | E21 | E26 |

# FIG. 12

SUPER-BLOCK

| j=0 | j=1 | j=2 | j=3 | j=4 | |
|------|------|------|------|------|------|
| 0.0 | 0.1 | 0.2 | 0.3 | 0.4 | i=0 |
| 1.0 | 1.1 | 1.2 | 1.3 | 1.4 | i=1 |
| 2.0 | 2.1 | 2.2 | 2.3 | 2.4 | i=2 |
| 3.0 | 3.1 | 3.2 | 3.3 | 3.4 | i=3 |
| 4.0 | 4.1 | 4.2 | 4.3 | 4.4 | i=4 |
| 5.0 | 5.1 | 5.2 | 5.3 | 5.4 | i=5 |
| 6.0 | 6.1 | 6.2 | 6.3 | 6.4 | i=6 |
| 7.0 | 7.1 | 7.2 | 7.3 | 7.4 | i=7 |
| 8.0 | 8.1 | 8.2 | 8.3 | 8.4 | i=8 |
| 9.0 | 9.1 | 9.2 | 9.3 | 9.4 | i=9 |
| 10.0 | 10.1 | 10.2 | 10.3 | 10.4 | i=10 |
| 11.0 | 11.1 | 11.2 | 11.3 | 11.4 | i=11 |

| Ma(k=0) | Ma(k=5) | Ma(k=6) | Ma(k=11) | Ma(k=12) | Ma(k=15) | Ma(k=20) | Ma(k=21) | Ma(k=26) |
|---------|---------|---------|----------|----------|----------|----------|----------|----------|
| Ma(k=1) | Ma(k=4) | Ma(k=7) | Ma(k=10) | Ma(k=13) | Ma(k=16) | Ma(k=19) | Ma(k=22) | Ma(k=25) |
| Ma(k=2) | Ma(k=3) | Ma(k=8) | Ma(k=9) | Ma(k=14) | Ma(k=17) | Ma(k=18) | Ma(k=23) | Ma(k=24) |
| Mb(k=0) | Mb(k=5) | Mb(k=6) | Mb(k=11) | Mb(k=12) | Mb(k=15) | Mb(k=20) | Mb(k=21) | Mb(k=26) |
| Mb(k=1) | Mb(k=4) | Mb(k=7) | Mb(k=10) | Mb(k=13) | Mb(k=16) | Mb(k=19) | Mb(k=22) | Mb(k=25) |
| Mb(k=2) | Mb(k=3) | Mb(k=8) | Mb(k=9) | Mb(k=14) | Mb(k=17) | Mb(k=18) | Mb(k=23) | Mb(k=24) |

EP 0 717 563 A2

# FIG. 13

ONE UNIT

# FIG. 15

# FIG. 14

# FIG. 16

EP 0 717 563 A2